# FASCICULE DE BREVET EUROPEEN

(11) **EP 1 010 126 B1**
(45) Date de publication et mention de la délivrance du brevet: **31.01.2007**
(21) Numéro de dépôt: 99957652.3
(22) Date de dépôt: 24.06.1999
(51) Int. Cl.: G06K 7/10, B07C 5/34

(54) **PROCEDE ET DISPOSITIF DE LECTURE DE RELIEFS PORTES PAR UN RECIPIENT TRANSPARENT OU TRANSLUCIDE**
LESEVERFAHREN UND -VORRICHTUNG FÜR RELIEFMARKIERUNGEN IN EINEM DURCHSICHTIGEN ODER DURCHSCHEINENDEN BEHÄLTER
METHOD AND DEVICE FOR READING RAISED DESIGNS BORNE BY A TRANSPARENT OR TRANSLUCENT CONTAINER

(30) Priorité: 26.06.1998 FR 9808356
(43) Date de publication de la demande: 21.06.2000
(73) Titulaire: Tiama, 69700 Montagny (FR)
(72) Inventeur: VOLAY, Philippe, 69130 Ecully (FR); LECONTE, Marc, 69560 Sainte Colombe-les-Vienne (FR); GARIN, Jean-François, 69008 Lyon (FR)
(74) Mandataire: Thibault, Jean-Marc
(86) Numéro de dépôt international: PCT/FR1999/001515
(87) Numéro de publication internationale: WO 2000/000924

(56) Documents cités:
- FR-A- 2 747 211
- US-A- 3 745 314
- US-A- 4 175 236
- US-A- 5 301 238
- US-A- 5 405 015
- PATENT ABSTRACTS OF JAPAN vol. 013, no. 580 (P-980), 21 décembre 1989 (1989-12-21) & JP 01 243193 A (TOYO GLASS KK), 27 septembre 1989 (1989-09-27)

## Description

### DOMAINE TECHNIQUE :

La présente invention concerne le domaine technique de l'inspection opto-électronique d'objets, d'articles creux ou de récipients, tels que par exemple, des bouteilles ou des flacons, à caractère transparent ou translucide, en vue d'assurer la lecture de reliefs au sens général, réalisés sur la paroi extérieure de tels récipients.

L'objet de l'invention vise, plus particulièrement, la lecture du numéro de moule inscrit sur le jable d'une bouteille en verre, sous la forme d'un code formé à partir de perles ou de reliefs.

Dans le domaine d'application préféré de l'invention, il est connu de lire le numéro du moule porté par les bouteilles, afin d'assurer, par exemple, l'association des défauts détectés par des capteurs au numéro du moule défectueux, le rejet automatique des bouteilles fabriquées par un moule défectueux et le prélèvement automatique des bouteilles issus d'un ou de plusieurs moules, pour échantillonnage notamment. L'objet de l'invention trouve aussi une autre application avantageuse dans le domaine du tri des bouteilles vides ou pleines par numéro de moule.

### TECHNIQUE ANTERIEURE :

Dans l'état de la technique, il est connu d'utiliser un dispositif de lecture placé sur la ligne de convoyage des bouteilles. Compte tenu de la position aléatoire des bouteilles sur la ligne de convoyage, il est nécessaire de faire tourner chaque bouteille selon son axe vertical devant le dispositif de lecture de façon à scruter toute la périphérie du jable de la bouteille, afin de lire les reliefs correspondant à un numéro de moule.

L'inconvénient majeur de cette technique est lié à la mise en rotation de chaque bouteille. Il s'ensuit, en effet, un risque de détérioration de la paroi extérieure de la bouteille en raison du frottement sur cette dernière, du mécanisme d'entraînement en rotation. Par ailleurs, la mise en rotation des bouteilles conduit à une cadence de contrôle réduite par rapport aux autres opérations de contrôle s'effectuant "à la volée", c'est-à-dire sans intervenir sur le processus d'entraînement en translation des bouteilles.

Pour tenter de remédier aux inconvénients de cette technique, la demande de brevet **FR 2 747 211** a proposé un dispositif de lecture opto-électronique comportant une source lumineuse illuminant la totalité de la périphérie d'une partie du corps du récipient.

La source lumineuse est constituée de deux éléments disposés de part et d'autre du convoyeur, au niveau du jable de la bouteille. Le dispositif comporte également deux miroirs tronconiques disposés de part et d'autre du convoyeur au niveau du corps de la bouteille et adaptés pour recevoir les rayons réfléchis par la bouteille et les transmettre à une caméra placée au-dessus de la bouteille. La caméra est associée à un système électronique de traitement permettant de restituer une image complète de la zone de la bouteille comportant le numéro de moule.

Si un tel dispositif de lecture des reliefs est conçu pour éviter une rotation des bouteilles, il doit être considéré que la mise en oeuvre d'un tel dispositif conduit à l'apparition de réflexions parasites réduisant le contraste de l'image, de sorte que les reliefs se trouvent noyés dans un bruit de fond rendant la lecture délicate. Par ailleurs, la mise en oeuvre de deux miroirs de part et d'autre du convoyeur, ne permet pas de récupérer complètement les faisceaux réfléchis sur toute la périphérie de la bouteille. Pour remédier à cet inconvénient, la demande de brevet ci-dessus propose d'utiliser quatre miroirs, ce qui impose une manutention particulière des récipients conduisant à une réduction de la cadence de contrôle.

### EXPOSE DE L'INVENTION :

L'objet de l'invention vise donc à remédier aux inconvénients énoncés ci-dessus en proposant un procédé adapté pour assurer une lecture optique de reliefs portés par la paroi externe d'un récipient transparent ou translucide, en effectuant aucune opération de manipulation sur les récipients, tout en présentant une efficacité optimisée de lecture.

Pour atteindre cet objectif, l'objet de l'invention concerne un procédé de lecture optique de reliefs portés par la paroi extérieure d'un récipient transparent ou translucide, le procédé consistant :
- à éclairer par un faisceau lumineux incident, la paroi extérieure du récipient selon sa périphérie,
- à récupérer par un élément optique, les faisceaux lumineux réfléchis par le récipient en vue de les transmettre à un système de réception,
- et à assurer le traitement des faisceaux lumineux reçus par le système de réception, afin d'assurer l'identification des reliefs,
caractérisé en ce que:
- l'étape d'éclairage consiste à éclairer la paroi extérieure du récipient à l'aide d'un cône lumineux incident fourni par un système d'éclairage placé en dessous du récipient,
- le procédé consiste en outre à régler la largeur du cône lumineux incident pour limiter l'éclairement à au moins la partie de la paroi extérieure pourvue des reliefs, afin d'éviter des réflexions parasites,
- l'étape de récupération consiste à récupérer les faisceaux lumineux réfléchis par l'élément optique disposé en dessous du récipient et apte à former une image plane de la paroi du récipient sur le système de réception,
- et le procédé consiste en outre à régler l'angle de champ de l'élément optique en fonction des caractéristiques du récipient.

L'objet de l'invention vise également à proposer un dispositif de lecture optique de reliefs portés par la paroi extérieure d'un récipient transparent ou translucide, le dispositif comportant :
- un système d'éclairage apte à fournir un faisceau lumineux incident éclairant la paroi extérieure du récipient selon sa périphérie,
- un système de réception des faisceaux lumineux réfléchis par le récipient et récupérés par un élément optique interposé entre le récipient et le système de réception,
- et une unité d'analyse et de traitement des faisceaux lumineux reçus par le système de réception, afin d'assurer l'identification des reliefs, caractérisé en ce que :
   - le système d'éclairage est placé en dessous du récipient et fournit un cône lumineux incident, éclairant la paroi extérieure du récipient,
   - et l'élément optique est disposé en dessous du récipient et est apte à former une image plane de la paroi éclairée du récipient sur le système de réception.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

### BREVE DESCRIPTION DES DESSINS :

La **fig. 1** est une vue en coupe-élévation d'un exemple de réalisation d'un dispositif de lecture optique conforme à l'invention.
La **fig. 2** est un schéma illustrant un exemple de réalisation d'un système d'éclairage mis en oeuvre dans le dispositif conforme à l'invention.
La **fig. 3** est un schéma illustrant un exemple de réalisation d'un système de réception mis en oeuvre dans le dispositif de lecture conforme à l'invention.
La **fig. 4** est un exemple d'une image obtenue à partir du dispositif de lecture conforme à l'invention.

### MEILLEURE MANIERE DE REALISER L'INVENTION :

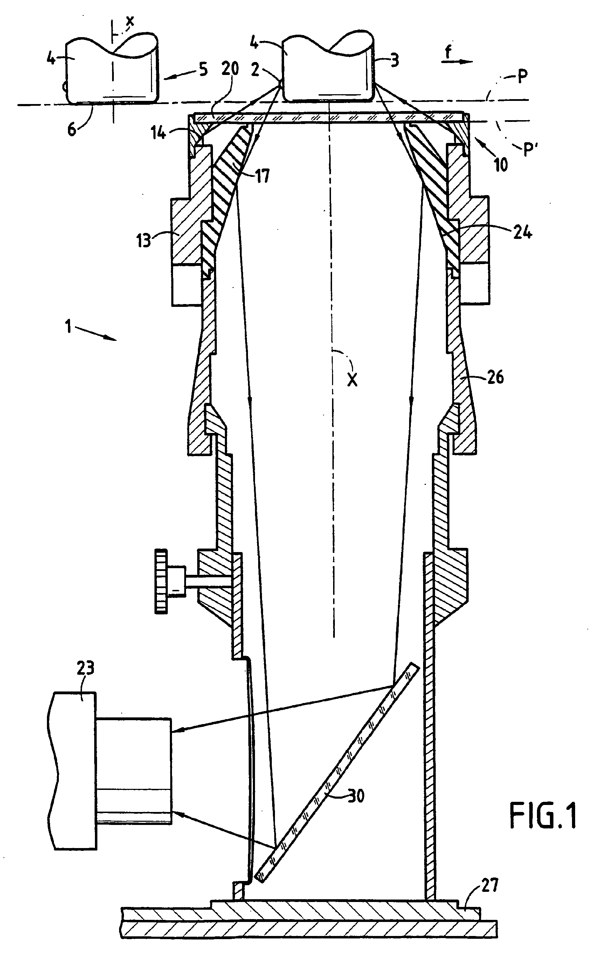

La **fig. 1** illustre un exemple de réalisation d'un dispositif **1** adapté pour lire des perles ou des reliefs **2** portés par la paroi extérieure **3** d'un objet creux ou d'un récipient **4** au sens général, transparent ou translucide. Dans une application préférée de réalisation, le récipient **4** est une bouteille dont le jable **5** comporte des reliefs ou des perles **2** formant un code correspondant à un numéro de moule utilisé pour la fabrication de ladite bouteille. De façon classique, chaque bouteille **4** est déplacée en translation par un système de manutention non représenté mais connu en soi, dans le sens de la flèche **f,** de sorte que les bouteilles **2** définissent par leur fond **6,** un plan inférieur de défilement **P.** Au cours de leur translation, chaque bouteille **4** est amenée dans une position où son axe de symétrie vertical x coïncide avec l'axe de symétrie **X** du dispositif de lecture **1.**

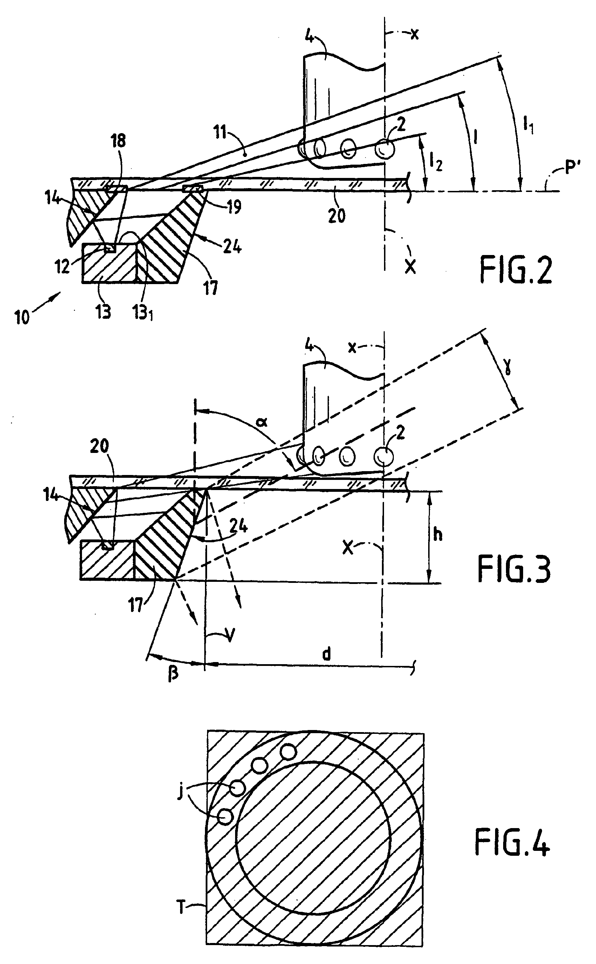

Le dispositif de lecture **1** selon l'invention comporte un système d'éclairage **10** apte à fournir un faisceau lumineux incident éclairant la paroi extérieure **3** de la bouteille selon sa périphérie. Conformément à l'invention, le système d'éclairage **10** est placé en dessous de la bouteille **4,** c'est-à-dire en dessous du plan inférieur de défilement **P,** afin de permettre le libre passage des bouteilles. Tel que cela ressort plus précisément de la **fig. 2,** le système d'éclairage **10** est adapté pour fournir un cône lumineux incident **11** permettant d'éclairer toute la périphérie du jable **5** d'une bouteille. Le système d'éclairage **10** comporte une source de lumière **12,** telle qu'une fibre optique annulaire, montée à l'intérieur d'un manchon **13** pour délivrer un anneau de lumière à partir de la face supérieure **13₁** du manchon. Le système d'éclairage **10** comporte également un miroir tronconique d'éclairage **14** placé au-dessus du manchon **13** pour recueillir les faisceaux lumineux émis par la source de lumière **12.** Le miroir d'éclairage **14** se présente sous la forme d'un élément tronconique creux de révolution selon un axe de symétrie **X.** Le miroir d'éclairage **14** est incliné en étant orienté en direction de la face supérieure **13₁** du manchon, de manière que le faisceau lumineux émis par le miroir présente un angle incident d'éclairage **I** pris par rapport à un plan **P'** parallèle au plan de défilement **P,** compris entre 5 et 25°. Tel que cela ressort de la **fig. 1,** le miroir d'éclairage **14** délivre un cône lumineux incident **11** délimité, extérieurement, par son bord supérieur et, intérieurement, par le bord supérieur d'une bague de révolution **17.** Les bords supérieurs du miroir d'éclairage **14** et de la bague de révolution **17** sont situés dans un même plan **P'** en délimitant entre-eux un écartement définissant une valeur maximale pour le cône incident **11.**

Selon une caractéristique préférée de l'invention, le système d'éclairage **10** comporte des moyens de réglage de la largeur du cône lumineux incident **11,** afin de limiter l'éclairement à la partie du jable **5** comportant les reliefs **2.** Tel que cela apparaît plus précisément à la **fig. 2,** le cône d'éclairage **11** est délimité extérieurement par un angle supérieur **I₁** et intérieurement, par un angle inférieur **I₂,** ces angles étant pris par rapport au plan P'. Selon une caractéristique, les moyens de réglage permettent de réduire l'angle supérieur **I₁** du cône d'éclairage **11,** afin d'éviter les réflexions de lumière sur le haut de la paroi opposée de la bouteille. Selon une autre caractéristique de l'invention, les moyens de réglage permettent d'augmenter l'angle inférieur **I₂** afin d'éviter les réflexions parasites dues au fond de la bouteille. D'une façon avantageuse, les moyens de réglage de la largeur du cône d'éclairage **11** sont constitués par des masques **18, 19** se présentant sous la forme d'anneaux opaques destinés à être montés à l'intérieur de feuillures aménagées respectivement, au niveau des bords supérieurs du miroir **14** et de la bague **17.** Ainsi, l'anneau de masquage **18** permet de masquer les rayons lumineux présentant un angle incident supérieur à l'angle **I₁,** tandis que l'anneau de masquage **19** occulte les rayons lumineux présentant un angle incident inférieur à l'angle **I₂.** Chaque anneau de masquage **18, 19** présente un diamètre donné et une largeur déterminée, afin de régler d'une valeur donnée, l'angle supérieur et/ou inférieur du cône d'éclairage **11.** Selon une caractéristique préférée de réalisation, le dispositif d'éclairage **10** est équipé d'une vitre de protection **20** placée au-dessus du miroir d'éclairage **14** pour éviter tout dommage ou salissure. La vitre de protection **20** est placée en contact avec le miroir **14** et la bague **17** pour éviter des reflets parasites. Ainsi, la vitre de protection **20** vient en appui sur les bagues de masquage **18, 19.**

Conformément à l'invention, le système d'éclairage **10** fournit un cône d'éclairage **11** qui illumine le jable **5** selon toute sa périphérie sur une zone limitée comportant les reliefs **2** à lire. Un tel éclairage provoque au niveau des reliefs **2,** une réflexion de la lumière destinée à être recueillie.

Le dispositif de lecture **1** selon l'invention comporte ainsi un système **23** de réception des faisceaux lumineux réfléchis par la bouteille et récupérés par un élément optique **24** interposé entre la bouteille **4** et le système de réception **23.** Par exemple, le système de réception **23** est une caméra matricielle CCD équipée d'un objectif standard de focale 8 ou 10 mm. Conformément à l'invention, l'élément optique **24** est disposé en dessous de la bouteille **4,** c'est-à-dire en dessous du plan de défilement inférieur **P** des bouteilles. L'élément optique **24** est conçu pour former une image plane de la paroi périphérique éclairée de la bouteille. Tel que cela ressort plus précisément de la **fig. 3,** l'élément optique **24** est constitué, dans l'exemple illustré, par l'intermédiaire d'un miroir optique tronconique réalisé, de préférence, sur la bague de révolution **17,** du côté de sa face interne. Le miroir optique **24** présente ainsi une forme tronconique de révolution d'axe de symétrie **X.**

Dans l'exemple de réalisation préférée illustré à la **fig. 3,** le miroir optique de révolution **24** est monté concentriquement à l'intérieur du miroir d'éclairage **14,** de sorte qu'ils se trouvent imbriqués l'un dans l'autre. Le miroir optique **24** est emmanché sur une série de viroles superposées **26** réglables en hauteur et supportées par un socle **27.** Le miroir optique **24** est destiné à supporter extérieurement le manchon **13** pourvu de la source de lumière **12.**

Le miroir optique **24** présente une inclinaison de même sens que celle du miroir d'éclairage **14,** de sorte que la grande base du miroir optique **24** se trouve située au-dessous de sa petite base. Le miroir optique **24** possède ainsi un angle d'inclinaison β considéré par rapport à la verticale **V** parallèle à l'axe de symétrie **X.** Le miroir optique **24** présente une hauteur **h** et un diamètre interne **d** pris au niveau de sa petite base.

Il doit être considéré que le miroir optique **24,** appelé aussi cône d'observation, est adapté pour donner un champ de vision (correspondant à l'angle de champ γ), permettant de voir les reliefs **2.** De plus, le miroir optique **24** est adapté pour présenter un angle d'observation α permettant de collecter les rayons réfléchis par les reliefs **2.** L'angle d'observation α est défini entre la verticale **V** et la direction d'incidence du miroir optique **24.** Il doit ainsi être considéré que le champ de vision de la caméra dépend de la taille du CCD et de la focale de l'objectif fixant ainsi le grandissement de l'image mais également du diamètre **d** et de la hauteur **h** du cône d'observation **24,** ces deux derniers paramètres définissant la proportion de l'image prise du jable. L'angle d'observation α du cône optique **24** doit être adapté en fonction de la pente du jable **5** et du degré de positionnement en saillie des reliefs **2.** Ainsi, plus l'angle α est grand, plus les reliefs **2** sont bien révélés, même lorsque les reliefs sont peu saillants. Toutefois, dans cette hypothèse, le système de détection est plus sensible aux variations d'épaisseur du fond des bouteilles. Ainsi, l'angle α peut varier entre 20 et 45°. A cet effet, comme l'angle d'observation α dépend de l'angle β du cône d'observation, il est prévu une gamme de miroirs optiques **24** présentant des valeurs différentes pour l'angle β. Par exemple, il peut être prévu de disposer d'une série de quatre miroirs optiques **24** présentant chacun un angle β égal à 19, 25, 30 et 35°. Bien entendu, chaque miroir optique **24** possède un diamètre d et une hauteur h adaptés au diamètre de la bouteille **4.**

Les faisceaux lumineux recueillis par le miroir optique **24** sont transmis directement ou, comme illustré à la **fig.** 1, par l'intermédiaire d'un miroir de renvoi **30** à la caméra **23,** placé latéralement par rapport à l'axe de symétrie vertical **X.** Bien entendu, il peut être envisagé de placer la caméra **23** dans l'alignement de l'axe **X.** D'une manière générale, il doit être constaté que la caméra peut être placée avantageusement en dessous du plan de défilement **P.**

La caméra **23** est reliée à une unité, non représentée, d'analyse et de traitement des faisceaux lumineux reçus. La **fig. 4** illustre, à titre d'exemple, une image **T** reçue par la caméra **23.** L'image reçue **T** fait apparaître une couronne correspondant au jable et dans laquelle apparaissent des informations **j** correspondant aux reliefs **2.** L'unité d'analyse et de traitement scrute ainsi l'intérieur de la couronne pour permettre l'identification des reliefs et, par suite, déterminer le numéro du moule.

### POSSIBILITE D'APPLICATION INDUSTRIELLE :

La mise en oeuvre du dispositif de lecture **1** selon l'invention découle directement de la description qui précède.

Il est à noter que le dispositif de lecture **1** selon l'invention est installé sur le trajet de convoyage des bouteilles sans modification du système de translation, dans la mesure où le dispositif de lecture est intégré en dessous du plan inférieur **P** de défilement des bouteilles. De plus, en fonction de la forme et des dimensions des bouteilles à contrôler, la largeur du cône d'éclairement **11** est déterminée pour illuminer uniquement le jable portant les reliefs **2.** A cet égard, le système d'éclairage **10** est équipé ou non, d'un anneau de masquage intérieur **19** et/ou extérieur **18.** Ce choix est effectué à partir d'une gamme d'anneaux de masquage **18, 19** présentant des largeurs et des diamètres différents.

De même, il est prévu de régler ou de déterminer l'angle de champ γ de la caméra en fonction des caractéristiques de forme et de dimensions des récipients. Dans l'exemple illustré, l'angle de champ γ est déterminé en choisissant un miroir d'observation **24** présentant une hauteur **h,** un diamètre **d** et un angle d'inclinaison β déterminés. Ce choix est effectué à partir d'une gamme de plusieurs miroirs d'observation **24** présentant chacun des caractéristiques différentes.

Bien entendu, la prise d'une image est effectuée lorsque l'axe de symétrie **x** d'une bouteille se trouve en alignement avec l'axe de symétrie **X** du dispositif de lecture. L'image prise par la caméra **23** est ensuite traitée pour permettre la lecture des reliefs **2.**

L'invention n'est pas limitée aux exemples décrits et représentés, car diverses modifications peuvent y être apportées sans sortir de son cadre. Ainsi, il peut être prévu de remplacer le miroir optique tronconique par l'intermédiaire d'un prisme présentant les fonctions décrites ci-dessus.

## Revendications

1. - Procédé de lecture optique de reliefs **(2)** portés par la paroi extérieure **(3)** d'un récipient **(4)** transparent ou translucide, le procédé consistant
- à éclairer par un faisceau lumineux incident, la paroi extérieure du récipient **(4)** selon sa périphérie,
- à récupérer par un élément optique **(24),** les faisceaux lumineux réfléchis par le récipient en vue de les transmettre à un système de réception **(23),**
- et à assurer le traitement des faisceaux lumineux reçus par le système de réception **(23),** afin d'assurer l'identification des reliefs,
**caractérisé en ce que**:
- l'étape d'éclairage consiste à éclairer la paroi extérieure du récipient **(4)** à l'aide d'un cône lumineux incident **(11)** fourni par un système d'éclairage **(10)** placé en dessous du récipient,
- Le procédé consiste en outre à régler la largeur du cône lumineux incident **(11)** pour limiter l'éclairement à au moins la partie de la paroi extérieure pourvue des reliefs **(2),** afin d'éviter des réflexions parasites,
- l'étape de récupération consiste à récupérer les faisceaux lumineux réfléchis, par l'élément optique **(24)** disposé en dessous du récipient et apte à former une image plane de la paroi du récipient sur le système de réception **(23)**,
- et le procédé consiste en outre à régler l'angle de champ (γ) de l'élément optique **(24)** en fonction des caractéristiques du récipient.

2. - Procédé selon la revendication 1, **caractérisé en ce qu'**il consiste à régler la largeur du cône lumineux incident **(11)** en utilisant un ou plusieurs anneaux de masquage **(18, 19)** réduisant l'angle extérieur ou l'angle intérieur du cône lumineux incident.

3. - Procédé selon la revendication 1, **caractérisé en ce qu'**il consiste à régler l'angle de champ (γ) de l'élément optique en faisant varier l'angle (α) de l'élément optique **(24).**

4. - Procédé selon la revendication 3, **caractérisé en ce qu'**il consiste à régler l'angle de champ (γ) de l'élément optique en choisissant parmi une gamme, un élément optique **(24)** constitué d'un cône de révolution présentant un angle déterminé (β).

5. - Dispositif de lecture optique de reliefs **(2)** portés par la paroi extérieure **(3)** d'un récipient transparent ou translucide **(4),** le dispositif comportant :
- un système d'éclairage **(10)** apte à fournir un faisceau lumineux incident éclairant la paroi extérieure du récipient selon sa périphérie,
- un système de réception **(23)** des faisceaux lumineux réfléchis par le récipient et récupérés par un élément optique **(24)** interposé entre le récipient **(4)** et le système de réception **(23),**
- et une unité d'analyse et de traitement des faisceaux lumineux reçus par le système de réception, afin d'assurer l'identification des reliefs, **caractérisé en ce que** :
- le système d'éclairage (**10**) est placé en dessous du récipient et fournit un cône lumineux incident **(11)**, éclairant la paroi extérieure du récipient,
- et l'élément optique **(24)** est, disposé en dessous du récipient et est apte à former une image plane de la paroi éclairée du récipient sur le système de réception.

6. - Dispositif selon la revendication 5, **caractérisé en ce qu'**il comporte des moyens de réglage **(18, 19)** de la largeur du cône lumineux incident **(11)** pour limiter l'éclairement à au moins la partie de la paroi externe pourvue des reliefs **(2),** afin d'éviter des réflexions parasites.

7. - Dispositif selon la revendication 6, **caractérisé en ce que** les moyens de réglage de la largeur du cône lumineux incident sont constitués par une série d'anneaux de masquage **(18, 19)** adaptés pour réduire l'angle extérieur ou l'angle intérieur du cône lumineux incident **(11).**

8. - Dispositif selon la revendication 5, **caractérisé en ce qu'**il comporte en tant qu'élément optique **(24),** un cône optique de révolution présentant un angle d'observation ( α) déterminé.

9. - Dispositif selon la revendication 5, **caractérisé en ce qu'**il comporte des moyens de réglage de l'angle de champ (γ) de l'élément optique en fonction des caractéristiques du récipient.

10. - Dispositif selon la revendication 9, **caractérisé en ce que** les moyens de réglage de l'angle de champ (γ) sont constitués par le choix d'un cône parmi une gamme, et présentant des angles d'observation (β) différents entre-eux.

11. - Dispositif selon la revendication 5, **caractérisé en ce que** le système d'éclairage **(10)** comporte un cône optique d'éclairage **(14)** placé en relation d'un anneau de lumière **(12).**

12. - Dispositif selon la revendication 11, **caractérisé en ce qu'**il comporte une plaque de protection transparente **(20)** montée en contact sur le cône optique d'éclairage **(14).**

13. - Dispositif selon les revendications 8 et 12, **caractérisé en ce que** le cône optique **(24)** est monté sur une virole **(26)** et est destiné à supporter de façon concentrique, le cône optique d'éclairage **(14).**

## Claims

1. - A method of optically reading relief (2) carried by the outside wall (3) of a transparent or translucent receptacle (4), the method consisting in:
- illuminating the outside wall of the receptacle (4) around its periphery with an incident light beam;
- using an optical element (24) to pick up the light beams reflected by the receptacle in order to transmit them to a receiver system (23); and
- processing the light beams received by the receiver system (23) in order to identify relief;
the method being **characterised in that**:
- the illuminating step consists in illuminating the outside wall of the receptacle (4) by means of an incident light cone (11) supplied by a lighting system (10) placed beneath the receptacle;
- the method further consists in adjusting the width of the incident light cone (11) to limit lighting at least to the portion of the outside wall that is provided with relief (2) in order to avoid parasitic reflections;
- the picking up step consists in picking up the reflected light beams by means of the optical element (24) disposed beneath the receptacle and suitable for forming a plane image of the wall of the receptacle on the receiver system (23); and
- the method further consists in adjusting the field angle (γ) of the optical element (24) as a function of the characteristics of the receptacle.

2. - A method according to claim 1, **characterised in that** it consists in adjusting the width of the incident light cone (11) by using one or more masking rings (18, 19) reducing the outside angle or the inside angle of the incident light cone.

3. - A method according to claim 1, **characterised in that** it consists in adjusting the field angle (γ) of the optical element by varying the angle (α) of the optical element (24).

4. - A method according to claim 3, **characterised in that** it consists in adjusting the field angle (γ) of the optical element by selecting an optical element (24) having a circular cone with a determined angle (β), said element being selected from a range of elements.

5. - Read apparatus for optically reading relief (2) carried by the outside wall (3) of a transparent or translucent receptacle (4), the apparatus comprising:
- a lighting system (10) suitable for supplying an incident light beam illuminating the periphery of the outside wall of the receptacle;
- a receiver system (23) for receiving light beams reflected by the receptacle and picked up by an optical element (24) interposed between the receptacle (4) and the receiver system (23); and
- an analysis and processing unit for analyzing and processing the light beams received by the receiver system for the purpose of identifying relief, the apparatus being **characterised in that**:
- the lighting system (10) is placed beneath the receptacle and supplies an incident light cone (11) that illuminates the outside wall of the receptacle; and
- the optical element (24) is disposed beneath the receptacle and is suitable for forming a plane image of the illuminated wall of the receptacle on the receiver system.

6. - Apparatus according to claim 5, **characterised in that** it includes adjustment means (18, 19) for adjusting the width of the incident light cone (11) to limit illumination to at least the portion of the outside wall that is provided with relief (2) so as to avoid parasitic reflections.

7. - Apparatus according to claim 6, **characterised in that** the means for adjusting the width of the incident light cone are constituted by a series of masking rings (18, 19) adapted to reduce the outside angle or the inside angle of the incident light cone (11).

8. - Apparatus according to claim 5, **characterised in that** as the optical element (24), it includes a circular optical cone of determined observation angle (α).

9. - Apparatus according to claim 5, **characterised in that** it includes means for adjusting the field angle (γ) of the optical element as a function of the characteristics of the receptacle.

10. - Apparatus according to claim 9, **characterised in that** the means for adjusting the field angle (γ) are constituted by selecting one cone from a range of cones having mutually different observation angles (β).

11. - Apparatus according to claim 5, **characterised in that** the lighting system (10) includes a lighting optical cone (14) placed relative to a light ring (12).

12. - Apparatus according to claim 11, **characterised in that** it includes a transparent protective plate (20) mounted in contact with the lighting optical cone (14).

13. - Apparatus according to claims 8 and 12, **characterised in that** the optical cone (24) is mounted on a ring (26) and is designed to support the lighting optical cone (14) in concentric manner.

## Patentansprüche

1. Verfahren zum optischen Lesen von Reliefs (2), die von der Außenwand eines transparenten oder lichtdurchlässigen Behälters (4) getragen werden, wobei das Verfahren darin besteht:
- durch einen einfallenden Lichtstrahl die Außenwand des Behälters (4) gemäß ihrem Umfang zu beleuchten,
- durch ein optisches Element (24) die Lichtstrahlen, die von dem Behälter reflektiert werden, im Hinblick darauf wiederzuerhalten, sie zu einem Empfängersystem (23) zu übertragen,
- und die Verarbeitung der Lichtstrahlen sicherzustellen, die von dem Empfängersystem (23) empfangen werden, um die Identifizierung der Reliefs sicherzustellen,
**dadurch gekennzeichnet, daß**
- der Schritt des Beleuchtens darin besteht, die Außenwand des Behälters (4) mit einem einfallenden Lichtkegel (11) zu beleuchten, der von einem Beleuchtungssystem (10) geliefert wird, das unter dem Behälter angeordnet ist,
- wobei das Verfahren im übrigen darin besteht, die Breite des einfallenden Lichtkegels (11) einzustellen, um die Beleuchtung wenigstens des Teils der Außenwand zu begrenzen, der mit Reliefs (2) versehen ist, um Störreflexe zu vermeiden,
- wobei der Schritt des Wiedererhaltens darin besteht, die reflektierten Lichtstrahlen durch das optische Element (24) wiederzuerhalten, das unter dem Behälter angeordnet ist und ausgelegt ist, um ein ebenes Bild der Wand des Behälters auf dem Empfängersystem (23) zu bilden,
- und wobei das Verfahren außerdem darin besteht, den Feldwinkel (γ) des optischen Elements (24) in Abhängigkeit der Merkmale des Behälters einzustellen.

2. Verfahren nach Anspruch 1, **dadurch gekennzeichnet, daß** es darin besteht, die Breite des einfallenden Lichtkegels (11) durch Verwenden eines oder mehrerer Maskierungsringe/s (18, 19) einzustellen, der/die den äußeren oder den inneren Winkel des einfallenden Lichtkegels vermindert/n.

3. Verfahren nach Anspruch 1, **dadurch gekennzeichnet, daß** es darin besteht, den Feldwinkel (γ) des optischen Elements durch Variieren des Winkels (α) des optischen Elements (24) einzustellen.

4. Verfahren nach Anspruch 3, **dadurch gekennzeichnet, daß** es darin besteht, den Feldwinkel (γ) des optischen Elements durch Auswählen eines optischen Elementes (24), das von einem Rotationskegel mit vorbestimmtem Winkel (β) gebildet ist, aus einer Palette einzustellen,.

5. Vorrichtung zum optischen Lesen von Reliefs (2), die von der Außenwand (3) eines transparenten und lichtdurchlässigen Behälters (4) getragen werden, wobei die Vorrichtung umfaßt:
- ein Beleuchtungssystem (10), das geeignet ist, einen einfallenden Lichtstrahl zu liefern, der die Außenwand des Behälters gemäß ihrem Umfang beleuchtet,
- ein Empfängersystem (23) der Lichtstrahlen, die durch den Behälter reflektiert werden und wieder erhalten werden durch ein optisches Element (24), das zwischen den Behälter (4) und das Empfängersystem (23) eingefügt ist,
- und eine Einheit zur Analyse und Verarbeitung der Lichtstrahlen, die durch das Empfängersystem empfangen werden, um die Identifikation der Reliefs sicherzustellen, **dadurch gekennzeichnet, daß**:
- das Beleuchtungssystem (10) unter dem Behälter angeordnet ist und einen einfallenden Lichtkegel (11) bildet, der die Außenwand des Behälters beleuchtet,
- und das optische Element (24) unter dem Behälter angeordnet ist und geeignet ist, ein ebenes Bild der beleuchteten Wand des Behälters auf dem Empfängersystem zu bilden.

6. Vorrichtung nach Anspruch 5, **dadurch gekennzeichnet, daß** sie Mittel zum Einstellen (18, 19) der Breite des einfallenden Lichtkegels (11) umfaßt, um die Beleuchtung wenigstens des Teils der mit Reliefs versehenen Außenwand (2), zu begrenzen, um Störreflexe zu vermeiden.

7. Vorrichtung nach Anspruch 6, **dadurch gekennzeichnet, daß** die Mittel zum Einstellen der Breite des einfallenden Lichtkegels aus einer Reihe von Maskierungsringen (18, 19) besteht, die geeignet sind, um den Außenwinkel oder den Innenwinkel des einfallenden Lichtkegels (11) zu vermindern.

8. Vorrichtung nach Anspruch 5, **dadurch gekennzeichnet, daß** sie als optisches Element (24) einen optischen Rotationskegel umfaßt, der einen vorbestimmten Beobachtungswinkel (α) aufweist.

9. Vorrichtung nach Anspruch 5, **dadurch gekennzeichnet, daß** sie Mittel zum Einstellen des Feldwinkels (γ) des optischen Elements in Abhängigkeit der Merkmale des Behälters umfaßt.

10. Vorrichtung nach Anspruch 9, **dadurch gekennzeichnet, daß** die Mittel zum Einstellen des Feldwinkels (γ) gebildet werden durch die Wahl eines Kegels aus einer Palette und Beobachtungswinkel (β) aufweisen, die voneinander verschieden sind.

11. Vorrichtung nach Anspruch 5, **dadurch gekennzeichnet, daß** das Beleuchtungssystem (10) einen optischen Beleuchtungskegel (14) umfaßt, der relativ zu einem Lichtring (12) angeordnet ist.

12. Vorrichtung nach Anspruch 11, **dadurch gekennzeichnet, daß** sie eine transparente Schutzplatte (20) umfaßt, die mit Kontakt auf dem optischen Beleuchtungskegel (14) angebracht ist.

13. Vorrichtung nach Anspruch 8 und 12, **dadurch gekennzeichnet, daß** der optische Kegel (24) auf einer Zwinge (26) angebracht ist und dazu vorgesehen ist, den optischen Beleuchtungskegel (14) konzentrisch zu tragen.
